# EUROPEAN PATENT APPLICATION

(11) **EP 4 768 533 A1**
(43) Date of publication of application: **01.07.2026**
(21) Application number: 24856176.3
(22) Date of filing: 12.07.2024
(51) Int. Cl.: C08L 7/00, B60C 1/00, C08K 3/04, C08K 3/013, C08K 3/36

(54) **TREAD RUBBER COMPOSITION, TIRE, AND HEAVY-LOAD TIRE**

(30) Priority: 23.08.2023 JP 2023135851
(71) Applicant: BRIDGESTONE CORPORATION, Chuo-ku Tokyo 104-8340 (JP)
(72) Inventor: AOKI, Kohei, Tokyo 104-8340 (JP); ISHIBASHI, Kenta, Tokyo 104-8340 (JP)
(74) Representative: Marks & Clerk LLP
(86) International application number: PCT/JP2024/025383
(87) International publication number: WO 2025/041482

(57) **Abstract**

The object is to provide a tread rubber composition that is excellent in wear resistance and low heat generating property without deteriorating other physical properties. In order to solve the above problem, a rubber composition contains a rubber component, carbon black, and an antioxidant, wherein the rubber component contains high-purity natural rubber having a nitrogen content of 0.3 mass% or less, and a mass ratio of the content of the carbon black to the total content of the carbon black and silica is 0.80 or more.

## Description

### TECHNICAL FIELD

The present disclosure relates to a tread rubber composition, a tire, and a heavy-duty tire.

### BACKGROUND

Conventionally, in heavy-duty pneumatic tires for rough roads, as a method for preventing deterioration of properties such as heat buildup performance, appearance performance, and wear resistance, selection of the carbon black to be blended in the tire tread rubber composition and optimization of its filling amount have been carried out. In recent years, various tread rubber compositions for heavy-duty pneumatic tires in which silica is blended together with carbon black have also been proposed.

For example, PTL 1 to PTL 3 disclose techniques in which silica is blended together with carbon black in a tread rubber composition of heavy-duty pneumatic tires for construction vehicles and the like in order to improve wear resistance, cut resistance, heat buildup performance, and the like.

### CITATION LIST

### Patent Literature

PTL 1: JP H1-311141 A
PTL 2: JP H3-65406 A
PTL 3: JP H4-226140 A

### SUMMARY

### (Technical Problem)

However, with respect to the techniques of PTL 1 to PTL 3, in the tread rubber composition of heavy-duty pneumatic tires, none were sufficient as attempts to improve heat buildup performance, appearance performance, and wear resistance after running, and further to suppress deterioration of physical properties. In particular, further improvement has been desired in the balance between low heat generating property and wear resistance.

Therefore, an object of the present disclosure is to provide a tread rubber composition that is excellent in wear resistance and low heat generating property without deteriorating other physical properties.

Further, an object of the present disclosure is to provide a tire and a heavy-duty tire that are excellent in wear resistance and low heat generating property without deteriorating other physical properties.

### (Solution to Problem)

The gist configuration of the present disclosure for solving the above problems is as follows.
(1) A tread rubber composition comprising a rubber component, carbon black, and silica, wherein
   the rubber component contains high-purity natural rubber having a nitrogen content of 0.3 mass% or less, and
   a mass ratio of content of the carbon black to total content of the carbon black and the silica is 0.80 or more.
   The tread rubber composition having the above configuration is excellent in wear resistance and low heat generating property without deteriorating other physical properties.
(2) The tread rubber composition according to (1), wherein the high-purity natural rubber is obtained by removing protein from natural rubber latex by a centrifugal separation process.
   The tread rubber composition having the above configuration is more excellent in wear resistance.
(3) The tread rubber composition according to (1) or (2), wherein content of an antioxidant is not less than 0.4 parts by mass and less than 2 parts by mass per 100 parts by mass of the rubber component.
   The tread rubber composition having the above configuration is more excellent in wear resistance without causing a decrease in kneading quality.
(4) The tread rubber composition according to any one of (1) to (3), wherein the total content of the carbon black and the silica is 55 parts by mass or less per 100 parts by mass of the rubber component.
   The tread rubber composition having the above configuration is more excellent in low heat generating property.
(5) The tread rubber composition according to any one of (1) to (4), wherein the content of the carbon black is less than 45 parts by mass per 100 parts by mass of the rubber component.
   The tread rubber composition having the above configuration is more excellent in low heat generating property.
(6) The tread rubber composition according to any one of (1) to (5), wherein the silica has a CTAB specific surface area of 200 m²/g to 240 m²/g.
   The tread rubber composition having the above configuration is more excellent in wear resistance.
(7) A tire comprising the tread rubber composition according to any one of (1) to (6).
   The tire having the above configuration is excellent in wear resistance and low heat generating property without deteriorating other physical properties.

### (Advantageous Effect)

According to the present disclosure, it is possible to provide a tread rubber composition that is excellent in wear resistance and low heat generating property without deteriorating other physical properties.

Further, according to the present disclosure, it is possible to provide a tire and a heavy-duty tire that are excellent in wear resistance and low heat generating property without deteriorating other physical properties.

### DETAILED DESCRIPTION

Hereinafter, an embodiment of the tread rubber composition and tire of the present disclosure will be illustratively described.

### (Tread Rubber Composition)

The tread rubber composition of the present disclosure comprises a rubber component, carbon black, and an antioxidant.

Hereinafter, each component constituting the tread rubber composition of the present disclosure will be described.

### (Rubber Component)

The rubber component contained in the tread rubber composition of the present disclosure contains high-purity natural rubber having a nitrogen content of 0.3 mass% or less.

By containing the high-purity natural rubber, an excessive amount of protein is not included in the natural rubber, and as a result, gelation can be suppressed, thereby achieving excellent wear resistance without causing a decrease in low heat generating property.

From the same viewpoint, the nitrogen content in the natural rubber is preferably 0.25 mass% or less, and more preferably 0.2 mass% or less.

Here, as long as the nitrogen content of the high-purity natural rubber is 0.3 mass% or less, other requirements are not particularly limited. For example, the high-purity natural rubber may be natural rubber from which protein has been removed by a centrifugal separation process.

The centrifugal separation process is a process in which deproteinization is performed by centrifugal separation from natural rubber latex, which is a raw material of natural rubber. The conditions of the centrifugal separation (rotational speed, time, etc.) are not particularly limited and may be appropriately changed according to the amount of protein to be removed. For example, when the nitrogen content in the natural rubber is to be 0.1 mass% or less, the centrifugal separation process may be performed several times at a rotational speed of about 7500 rpm.

After the centrifugal separation process, high-purity natural rubber can be obtained by performing washing and drying treatment.

The natural rubber latex used in the centrifugal separation process is not particularly limited. For example, field latex collected from rubber trees or concentrated natural rubber latex obtained by processing the same can be used. Also, the dry rubber content in the natural rubber latex is not particularly limited, but from the viewpoint of obtaining better wear resistance, it is preferably 10 mass% or more, more preferably 30 mass% or more, and even more preferably 40 mass% or more.

Further, the content of the high-purity natural rubber in the rubber component may be 100%, but as long as the object of the present disclosure is not impaired, other rubbers may also be contained. Furthermore, the natural rubber may be not only the high-purity natural rubber but also a mixture with ordinary natural rubber.

In that case, from the viewpoint of further improving wear resistance, the content of the high-purity natural rubber in the rubber component is preferably 50 mass% or more, more preferably 70 mass% or more, and particularly preferably 90 mass% or more.

The rubber component may contain, in addition to the above-described natural rubber, other synthetic rubbers. Examples of synthetic rubbers include, for example, diene synthetic rubbers such as butadiene rubber (BR), isoprene rubber (IR), styrene-butadiene rubber (SBR), styrene-isoprene-butadiene rubber (SIBR), chloroprene rubber (CR), acrylonitrile-butadiene rubber (NBR), and non-diene synthetic rubbers such as ethylene-propylene-diene rubber (EPDM), ethylene-propylene rubber (EPM), and butyl rubber (IIR).

Among the above synthetic rubbers, it is preferable that the rubber component contains butadiene rubber and/or styrene-butadiene rubber. This is because both low heat generating property and wear resistance can be achieved at a higher level.

The natural rubber and the diene synthetic rubber (hereinafter collectively referred to as "diene rubber") may be diene rubber that is not modified (hereinafter sometimes referred to as "unmodified diene rubber") or diene rubber that has been modified (hereinafter sometimes referred to as "modified diene rubber").

### (Carbon Black)

The rubber composition of the present disclosure further contains carbon black in addition to the above-described rubber component.

By including carbon black, the reinforcing property of the rubber composition is enhanced, and excellent wear resistance can be obtained.

In the rubber composition of the present disclosure, the mass ratio of the content of the carbon black to the total content of the carbon black and silica (described later) is required to be 0.80 or more. By setting the mass ratio of the content of the carbon black to the total content of the carbon black and silica to 0.80 or more, excellent wear resistance can be achieved.

From the viewpoint of maintaining good low heat generating property, the mass ratio of the content of the carbon black to the total content of the carbon black and silica is preferably 0.95 or less, and more preferably 0.85 or less.

Furthermore, in the rubber composition for tires of the present disclosure, the total content of the carbon black and silica is preferably 55 parts by mass or less per 100 parts by mass of the rubber component. This is because deterioration of low heat generating property can be more reliably suppressed.

In the rubber composition of the present disclosure, the mass ratio of the content of the carbon black to the content of silica (described later) is preferably 3.5 or more, and more preferably 4.0 or more. By setting the mass ratio of the content of the carbon black to the content of silica (described later) to 3.5 or more, excellent wear resistance can be achieved.

From the viewpoint of maintaining good low heat generating property, the mass ratio of the content of the carbon black to the content of silica (described later) is preferably 19 or less, and more preferably 10 or less.

Furthermore, the content of the carbon black is preferably less than 45 parts by mass per 100 parts by mass of the rubber component.

Although the inclusion of carbon black increases the wear resistance of the rubber composition, there is a risk of deterioration of low heat generating property; therefore, by setting the content of the carbon black to less than 45 parts by mass per 100 parts by mass of the rubber component, deterioration of low heat generating property can be more reliably suppressed.

From the same viewpoint, the content of the carbon black is more preferably 42 parts by mass or less per 100 parts by mass of the rubber component.

On the other hand, from the viewpoint of obtaining even better wear resistance, the content of the carbon black is preferably 30 parts by mass or more per 100 parts by mass of the rubber component, and more preferably 35 parts by mass or more.

The carbon black preferably has a nitrogen adsorption specific surface area (N₂SA) of 130 to 180 m²/g. When the N₂SA of the carbon black is 130 m²/g or more, better wear resistance can be obtained, and when the N₂SA of the carbon black is 180 m²/g or less, deterioration of productivity and low heat generating property can be suppressed.

From the same viewpoint, the N₂SA of the carbon black is preferably 140 to 170 m²/g.

The nitrogen adsorption specific surface area (N₂SA) of the carbon black can be measured, for example, in accordance with JIS K 6217-7:2013.

The carbon black preferably has a dibutyl phthalate (DBP) oil absorption of 80 to 120 ml/100 g. When the DBP oil absorption of the carbon black is 80 m²/g or more, deterioration of low heat generating property and productivity can be suppressed, and when the N₂SA of the carbon black is 120 ml/100 g or less, gelation can be suppressed and better wear resistance can be obtained.

From the same viewpoint, the DBP oil absorption of the carbon black is preferably 85 to 110 m²/g, and more preferably 85 to 100 m²/g.

The DBP oil absorption of the carbon black can be measured in accordance with JIS K 6217-4:2017.

### (Silica)

The tread rubber composition for tires of the present disclosure preferably contains silica in addition to the above-described rubber component and carbon black. By appropriately including the silica, the wear resistance and low heat generating property of the rubber composition can be improved.

Here, the content of the silica is preferably 5 parts by mass or more per 100 parts by mass of the rubber component. By setting the content of the silica within the above range, the reinforcing property of the tire is enhanced, and better wear resistance can be achieved. From the same viewpoint, the content of the silica is preferably 8 parts by mass or more per 100 parts by mass of the rubber component. On the other hand, from the viewpoint of suppressing deterioration of processability and heat buildup of the rubber composition, the content of the silica is preferably 30 parts by mass or less per 100 parts by mass of the rubber component, more preferably 20 parts by mass or less, and even more preferably 14 parts by mass or less.

The silica preferably has a CTAB specific surface area of 200 to 240 ml/100 g. When the CTAB specific surface area of the silica is 200 ml/100 g or more, a better effect of improving wear resistance can be obtained, and when the CTAB specific surface area of the silica is 240 ml/100 g or less, poor dispersion and deterioration of processability can be suppressed.

The CTAB specific surface area of the silica can be measured, for example, in accordance with JIS K 6430:2008.

Examples of the silica include, for example, wet silica (hydrous silicate), dry silica (anhydrous silicate), calcium silicate, aluminum silicate, and the like. Among these, wet silica is preferable because it has many silanol groups. These silicas may be used alone or in combination of two or more.

### (Antioxidant)

The tread rubber composition of the present disclosure contains, in addition to the above-described rubber component, silica, and optional carbon black, an antioxidant, and the content of the antioxidant is 0.4 parts by mass or more per 100 parts by mass of the rubber component.

By including 0.4 parts by mass or more of the antioxidant per 100 parts by mass of the rubber component in the tread rubber composition, the reinforcing property and wear resistance of the tread rubber composition can be enhanced. From the same viewpoint, the content of the antioxidant is preferably 0.7 parts by mass or more per 100 parts by mass of the rubber component.

The content of the antioxidant is also preferably 2 parts by mass or less per 100 parts by mass of the rubber component. When the content of the antioxidant is 2 parts by mass or less per 100 parts by mass of the rubber component, it is possible to suppress inhibition of the reaction between the silica and a silane coupling agent (described later), and to suppress deterioration of the kneading quality of the rubber composition.

The type of the antioxidantantioxidant is not particularly limited. For example, amine-based antioxidants, phenol-based antioxidants, and other antioxidants can be used.

Among these antioxidants, from the viewpoint of obtaining better wear resistance, it is preferable to use at least an amine-based antioxidant.

The amine-based antioxidant is preferably at least one selected from the group consisting of N-(1,3-dimethylbutyl)-N'-phenyl-p-phenylenediamine, N-isopropyl-N'-p-phenylenediamine, N-(3-methacryloyloxy-2-hydroxypropyl)-N'-phenyl-p-phenylenediamine, and N,N'-di-2-naphthyl-p-phenylenediamine. Among these, N-(1,3-dimethylbutyl)-N'-phenyl-p-phenylenediamine is particularly preferable.

The amine-based antioxidant may be used alone or in combination of two or more.

### (Other Components)

The tread rubber composition of the present disclosure may further contain, in addition to the above-described components, other components as appropriate, selected and blended as needed and for the intended purpose, as long as the effects of the present disclosure are not impaired. Examples of other components include, for example, silane coupling agents, inorganic fillers other than silica and carbon black, zinc oxide, softeners, tackifiers, dispersants, crosslinking agents, crosslinking accelerators, crosslinking coagents, stearic acid, colorants, antistatic agents, lubricants, and other additives, as well as various known compounding agents commonly used in the rubber industry. These may be commercially available products.

Examples of the silane coupling agent include, for example, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl)tetrasulfide, 3-mercaptopropyldimethoxymethylsiane, dimethoxymethylsilylpropyl-N,N-dimethylthiocarbamoyltetrasulfide, dimethoxymethylsilylpropylbenzothiazolyltetrasulfide, 3-octanoylthiopropyltriethoxysilane, 3-mercaptopropyltrimethoxysilane, 3-mercaptopropyltriethoxysilane, vinyltriethoxysilane, vinyltrimethoxysilane, 3-aminopropyltriethoxysilane, 3-aminopropyltrimethoxysilane, 3-mercaptopropylmethyldimethoxysilane, γ-glycidoxypropyltrimethoxysilane, γ-glycidoxypropylmethyldiethoxysilane, 3-[ethoxybis(3,6,9,12,15-pentaoxaoctacosan-1-yloxy)silyl]-1-propanethiol (trade name "Si363" manufactured by Degussa), and the like. These silane coupling agents may be used alone or in combination of two or more.

Examples of inorganic fillers other than silica and carbon black include, for example, aluminum hydroxide, clay, and the like. Among these inorganic fillers, aluminum hydroxide and the like are preferable because of their relatively high reinforcing property, and clay and the like are effective because of the effects obtained by utilizing their shape characteristics.

The tread rubber composition of the present disclosure preferably contains zinc oxide (ZnO) as a crosslinking accelerator. By including ZnO, heat aging resistance and high elastic modulus can be further improved. However, if the content of ZnO becomes too high, there is a risk of deterioration in crack growth, so its content is preferably less than 5 parts by mass per 100 parts by mass of the rubber component.

Furthermore, the softener is not particularly limited and may be appropriately selected according to the intended purpose. Examples include naphthenic base oil, paraffin base oil, and aromatic base oil. Here, the content of the softener is preferably 2 to 30 parts by mass per 100 parts by mass of the rubber component. If the content of the softener exceeds 30 parts by mass per 100 parts by mass of the rubber component, there is a risk that the softener may bleed out to the surface of the rubber product or that wear resistance may decrease.

Furthermore, among the above-described softeners, it is preferable to use naphthenic base oil or paraffin base oil, and most preferable to use naphthenic base oil. Aromatic oil is not preferable because it contains many aromatic components, has high affinity with such aromatic compounds, and more strongly inhibits reaction with the polymer. On the other hand, naphthenic base oil and paraffin base oil have the effect of assisting diffusion and reaction within the polymer, and oils with a lower pour point diffuse better within the polymer.

The classification of naphthenic base oil, paraffin base oil, and aromatic base oil is determined by CA value, CP value, and CN value. For example, those classified as naphthenic base oil include TDAE, SRAE, RAE, Black Oil, and the like. Those classified as paraffin base oil include spindle oil and paraffin oil.

Furthermore, a mixed oil such as A/O Mix (manufactured by SANKYO YUKA KOGYO K.K.), which is a mixture of naphthenic base oil and naphthenic asphalt, can also provide more preferable effects.

The timing for blending these lubrication oils is not particularly limited; for example, oil extension may be performed at the stage of manufacturing the rubber component, or the oil may be added when kneading the tread rubber composition.

The crosslinking agent is not particularly limited. For example, sulfur may be used.

The crosslinking accelerator may also be any known material and is not particularly limited. Examples include thiazole vulcanization accelerators such as 2-mercaptobenzothiazole and dibenzothiazyl disulfide; sulfenamide vulcanization accelerators such as N-cyclohexyl-2-benzothiazylsulfenamide and N-t-butyl-2-benzothiazylsulfenamide; guanidine vulcanization accelerators such as diphenyl guanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldithiophosphate.

### (Production of Tread Rubber Composition)

The method for producing the tread rubber composition of the present disclosure is not particularly limited, but for example, the rubber composition may be produced by compounding the above rubber component with various components selected as appropriate as needed, followed by kneading, warming, extrusion, and the like.

Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus may be appropriately selected according to the intended purpose. As the kneading apparatus, those commonly used for kneading rubber compositions, such as Banbury mixers, Intermix, kneaders, and rolls, may be used.

The conditions for warming are also not particularly limited, and various conditions such as warming temperature, warming time, and warming apparatus may be appropriately selected according to the intended purpose. As the warming apparatus, those commonly used for warming rubber compositions, such as warming roll machines, may be used.

The conditions for extrusion are also not particularly limited, and various conditions such as extrusion time, extrusion speed, extrusion apparatus, and extrusion temperature may be appropriately selected according to the intended purpose. As the extrusion apparatus, those commonly used for extruding rubber compositions, such as extruders, may be used. The extrusion temperature may be determined as appropriate.

The apparatus, method, and conditions for vulcanization are also not particularly limited and may be appropriately selected according to the intended purpose. As the apparatus for vulcanization, those commonly used for vulcanizing rubber compositions, such as molding vulcanizers using molds, may be used. As for the vulcanization conditions, the temperature is, for example, about 100 to 190°C.

### (Tire)

The tire of the present disclosure is characterized by including the above-described tread rubber composition of the present disclosure. By including the tread rubber composition of the present disclosure as a tire material, excellent wear resistance and low heat generating property can be achieved without deteriorating other physical properties.

Here, the tire of the present disclosure can be used, for example, as a heavy-duty tire, a tire for trucks and buses, an aircraft tire, or a passenger vehicle tire, but among these, it is preferably a heavy-duty tire. This is because the tread rubber composition used as the material for the tread portion is excellent in wear resistance, and thus provides significant advantages when used as a heavy-duty tire.

When using the above-described tread rubber composition of the present disclosure, for example, it may be obtained by molding using an unvulcanized rubber composition and then vulcanizing, or by molding using a semi-vulcanized rubber that has undergone a preliminary vulcanization step and then further subjecting it to main vulcanization. The tire of the present embodiment is preferably a pneumatic tire, and as the gas to be filled in the pneumatic tire, in addition to ordinary air or air with adjusted oxygen partial pressure, inert gases such as nitrogen, argon, and helium may be used.

In the tire of the present disclosure, it is required that the above-described tread rubber composition of the present disclosure be applied to the tread (base tread, cap tread, under tread), but it may also be applied to various other structural members. For example, it may be used for cushion rubber, shoulder, sidewall, clinch, bead filler, coating rubber for carcass, insulation, chafer, inner liner, and the like, and may also be used for side reinforcing layers of run flat tires and the like. Further, the tread rubber composition of the present disclosure can also be applied to products other than tires, such as rubber crawlers and seismic isolation rubber.

### EXAMPLES

The present disclosure will be described in more detail below with reference to examples, but the present disclosure is not limited in any way to the following examples.

### [Examples 1-3, Comparative Examples 1-4]

Samples of tread rubber compositions were prepared by compounding each component according to the formulations shown in Table 1 and kneading using a Banbury mixer.

### (Evaluation)

For each sample of an obtained tread rubber composition, after extrusion into a sheet, vulcanization was performed at 145°C for 90 minutes to prepare a vulcanized rubber sample. The obtained vulcanized rubber sample was then evaluated as follows.

### (1) Evaluation of Low Heat Generating Property

For each vulcanized rubber sample, the loss tangent (tanδ) was measured under the conditions of a temperature of 23°C, initial load of 1600 mN, dynamic strain of 1%, and frequency of 52 Hz, using a spectrometer (manufactured by Ueshima Seisakusho Co., Ltd.).

For the evaluation, the reciprocal of the measured value of tanδ was taken and was expressed as an index with the reciprocal value of tanδ for the sample of Comparative Example 1 set to 100. The larger the index value, the more excellent the low heat generating property. The evaluation results are presented in Table 1. Further, if the value was 95 or more, it was evaluated as excellent in low heat generating property.

### (2) Evaluation of Wear Resistance

For each vulcanized rubber sample, the wear rate was measured by rolling it at a constant speed over an abrasive wheel. The wear rate of Example 3 was estimated based on the amount of compounding chemicals and the measurement results of Comparative Examples 3, 4, and Example 1.

For the evaluation, the reciprocal of the wear rate was calculated and expressed as an index with the reciprocal of the wear rate of the vulcanized rubber made from the rubber composition of Comparative Example 1 set to 100. The larger the index value, the slower the wear rate and the better the wear resistance. The evaluation results are presented in Table 1.

### (3) Evaluation of Rupture Strength and Rupture Strength after Aging

For each vulcanized rubber sample, the rupture strength and the rupture strength after thermal aging at 100°C for 24 hours (rupture strength after aging) were measured. The rupture strength after aging for Example 3 was estimated based on the amount of compounding chemicals and the measurement results of rupture strength.

For the evaluation, each result was expressed as an index value with the measurement result of Comparative Example 1 set to 100, and the larger the index value, the more excellent the rupture strength and rupture strength after aging. The evaluation results are presented in Table 1.

**[Table 1]**

| | Comparative Example 1 | Comparative Example 2 | Comparative Example 3 | Comparative Example 4 | Example 1 | Example 2 | Example 3 |
|---|---|---|---|---|---|---|---|
| General-purpose NR *1 | 100 | 100 | | | | | |
| High-purity NR *2 | | | 100 | 100 | 100 | 100 | 100 |
| CB1 *3 | 38 | | | | | | |
| CB2 *4 | | 38 | 38 | 41 | 41 | 38 | 41 |
| Silica *7 | 12 | 12 | 12 | 12 | 9 | 9 | 9 |
| Coupling agent *8 | 0.5 | 0.5 | 0.5 | 0.6 | 0.4 | 0.5 | 0.4 |
| Antioxidant *5 | 0.9 | 1.9 | 1.9 | 1.9 | 1.9 | 1.9 | 0.9 |
| Vulcanization accelerator *6 | 1.4 | 1.4 | 1.4 | 1.5 | 1.5 | 1.4 | 1.5 |
| Sulfur | 1.9 | 1.9 | 2.0 | 1.3 | 1.3 | 2.0 | 1.6 |
| Total of CB + silica | 50 | 50 | 50 | 53 | 50 | 47 | 50 |
| (CB)/(total of CB + silica) | 0.76 | 0.76 | 0.76 | 0.77 | 0.82 | 0.81 | 0.82 |
| Low heat generating property evaluation (index) | 100 | 91 | 93 | 91 | 99 | 100 | 97 |
| Wear resistance evaluation (index) | 100 | 162 | 188 | 205 | 247 | 233 | 235 |
| Rupture strength evaluation (index) | 100 | 106 | 109 | 102 | 109 | 111 | 106 |
| Rupture strength after aging evaluation (index) | 100 | 99 | 108 | 107 | 107 | 113 | 111 |

| | | | | | | | |
|---|---|---|---|---|---|---|---|
| *1 TSR20 *2 High-purity natural rubber with a nitrgen content of 0.18 mass% obtained by centrifugal separation *3 Carbon black with N₂SA: 126 m²/g,DBP oil absortion: 92 ml/100 g *4 Carbon black with N₂SA: 145 m²/g, DBP oil absorption: 99 ml/100 g *5 N-(1,3-dimethylbutyl)-N'-phenyl-p-phenylenediamine, "Nocrac 6C" manufactured by Ouchi Shinko Chemical Industrial Co., Ltd. *6 One or more selected from thiazole vulcanization accelerator, sulfenamide vulcanization accelerator, guanidine vulcanization accelerator, thiuram vulcanization accelerator, and dithiocarbamate vulcanization accelerator so that the total amount is as indicated in Table 1 *7 CTAB specific surface area: 220 m²/g *8 "ABC856" manufactured by Shin-Etsu Chemical Co., Ltd. | | | | | | | |

From Table 1, it can be seen that each sample of the tread rubber compositions corresponding to the examples demonstrates a wellbalanced and excellent result in terms of low heat generating property, wear resistance, rupture strength, and rupture strength after aging. On the other hand, it can be seen that each sample of the tread rubber compositions corresponding to the comparative examples is inferior to the examples in at least one evaluation item.

### INDUSTRIAL APPLICABILITY

According to the present disclosure, it is possible to provide a tread rubber composition that is excellent in wear resistance and low heat generating property without deteriorating other physical properties.

Further, according to the present disclosure, it is possible to provide a tire and a heavy-duty tire that are excellent in wear resistance and low heat generating property without deteriorating other physical properties.

## Claims

1. A tread rubber composition comprising a rubber component, carbon black, and silica, wherein
the rubber component contains high-purity natural rubber having a nitrogen content of 0.3 mass% or less, and
a mass ratio of content of the carbon black to total content of the carbon black and the silica is 0.80 or more.

2. The tread rubber composition according to claim 1, wherein the high-purity natural rubber is obtained by removing protein from natural rubber latex by a centrifugal separation process.

3. The tread rubber composition according to claim 1 or 2, wherein content of an antioxidant is not less than 0.4 parts by mass and less than 2 parts by mass per 100 parts by mass of the rubber component.

4. The tread rubber composition according to claim 1 or 2, wherein the total content of the carbon black and the silica is 55 parts by mass or less per 100 parts by mass of the rubber component.

5. The tread rubber composition according to claim 1 or 2, wherein the content of the carbon black is less than 45 parts by mass per 100 parts by mass of the rubber component.

6. The tread rubber composition according to claim 1 or 2, wherein the silica has a CTAB specific surface area of 200 m²/g to 240 m²/g.

7. A tire comprising the tread rubber composition according to claim 1 or 2.
